# FASCICULE DE BREVET EUROPEEN

(11) **EP 2 564 045 B1**
(45) Date de publication et mention de la délivrance du brevet: **16.11.2016**
(21) Numéro de dépôt: 11731445.0
(22) Date de dépôt: 21.04.2011
(51) Int. Cl.: F02C 7/236, F02C 7/224

(54) **SYSTÈME D'ALIMENTATION EN CARBURANT DE TURBOMACHINE**
KRAFTSTOFFSYSTEM EINER TURBOMASCHINE
FUEL SYSTEM FOR A TURBOMACHINE

(30) Priorité: 28.04.2010 FR 1053246
(43) Date de publication de la demande: 06.03.2013
(73) Titulaire: Safran Aircraft Engines, 75015 Paris (FR)
(72) Inventeur: PORA, Loïc, F-77430 Champagne sur Seine (FR)
(74) Mandataire: Gevers & Orès
(86) Numéro de dépôt international: PCT/FR2011/050928
(87) Numéro de publication internationale: WO 2011/135240

(56) Documents cités:
- US-A- 3 043 104
- US-A- 3 511 259
- US-A- 4 073 136

## Description

Le domaine de la présente invention est celui des turbomachines et plus particulièrement celui des équipements qui assurent l'alimentation en carburant de ces turbomachines.

Traditionnellement les turbomachines aéronautiques portent un certain nombre d'équipements, telles qu'une pompe basse pression (pompe BP) et une pompe haute pression (pompe HP), des filtres, des clapets anti-retour, une vanne de régulation etc., qui sont fixés sur le carter extérieur et qui ont pour fonction d'assurer l'alimentation de la chambre de combustion en carburant, à la bonne pression et au bon débit.

Le circuit carburant est composé tout d'abord d'une pompe centrifuge basse pression, gavée en amont par une pompe placée sur la partie avion du circuit, qui assure le niveau de pression demandée en entrée pour un bon fonctionnement de la pompe haute pression. Cette dernière, qui élève le niveau de pression au niveau nécessaire à l'injection du carburant dans la chambre de combustion de la turbomachine, est généralement une pompe centrifuge à débit constant, qui délivre en sortie le même débit de carburant quel que soit le régime du moteur. Entre la pompe haute pression et les injecteurs de la chambre de combustion on trouve une vanne de régulation du débit injecté, ou doseur, qui ajuste le débit envoyé aux injecteurs au débit donnant le régime souhaité par le pilote pour la turbomachine. Le carburant excédentaire est renvoyé en amont de la pompe haute pression par un circuit, ou boucle, dit de recirculation.

Par ailleurs le carburant pompé dans les réservoirs passe au travers d'échangeurs où il récupère des calories en provenance d'autres fluides de l'avion, tels que l'huile de lubrification des paliers du moteur ou le fluide d'actionnement des vérins des gouvernes mobiles de l'avion. De façon générale ces échangeurs sont placés en amont de la pompe haute pression pour éviter qu'ils fonctionnent à des pressions importantes, et donc pour qu'ils soient plus simples et moins onéreux à réaliser.

L'un des inconvénients rencontrés avec les circuits carburant traditionnels est la présence d'une pompe basse pression de type centrifuge, qui comporte des pièces tournantes et qui, de ce fait, a une fiabilité dictée par la durée de vie de ces pièces. Il serait avantageux de pouvoir s'affranchir de ces pièces tournantes et d'utiliser des pompes du type éjecteur ou pompe à jet, qui utilisent l'effet Venturi pour aspirer le carburant en provenance du circuit avion. Dans ces pompes un fluide est envoyé sous pression dans une chambre d'aspiration où il est converti en un flux haute vitesse, ce qui diminue sa pression, créant ainsi un vide partiel qui aspire le carburant en provenance de l'avion. Celui-ci est alors entraîné simultanément avec le fluide d'entraînement, à une pression supérieure à sa pression initiale, mais inférieure à celle du fluide d'entraînement. La très bonne fiabilité de ces pompes à jet est inhérente à leur conception simple, sans pièce mobile, bien qu'aucune lubrification et que très peu d'entretien soient requis.

L'utilisation de telles pompes, en choisissant le carburant de recirculation comme fluide d'entraînement, se heurte cependant à des limitations dues à la température du carburant car elles fonctionnent à des niveaux de pression proches de la pression de vapeur saturante du fluide d'entraînement qu'elles utilisent. Elles nécessitent donc que celui-ci soit relativement froid pour qu'il ne se vaporise pas spontanément lors de sa mise en dépression. Un ensemble d'alimentation en carburant selon l'art antérieur est divulgué dans US 3043104.

La présente invention a pour but de remédier à ces inconvénients en proposant un circuit carburant dans lequel l'alimentation basse pression en carburant peut être assurée par une pompe qui fonctionne sans pièce tournante et avec un fluide à la température la plus basse possible.

A cet effet, l'invention a pour objet un ensemble d'alimentation en carburant de la chambre de combustion d'une turbomachine et de pressurisation du carburant selon la revendication 1, comprenant au moins une première pompe de pressurisation du carburant en provenance des réservoirs de l'aéronef et une seconde pompe d'élévation de la pression au delà de la pression de sortie de ladite première pompe, ladite seconde pompe étant une pompe à débit de carburant constant, une partie du carburant en sortie étant envoyée vers la chambre de combustion via un circuit direct, la partie du carburant non envoyée vers la chambre de combustion étant recirculée, via un circuit de recirculation, en amont de ladite seconde pompe, ledit ensemble comportant en outre un bloc hydraulique de dosage du débit destiné à être injecté dans la chambre de combustion de la turbomachine au moyen d'un doseur situé sur le circuit direct et au moins un échangeur de chaleur dans lequel circule le carburant, caractérisé en ce que ledit échangeur est positionné dans le circuit direct en aval du point de dérivation du circuit de recirculation et en amont du doseur de carburant.

Le positionnement des échangeurs en aval de la dérivation du carburant et en amont du doseur permet d'éviter de réchauffer le carburant recirculé et ainsi de pouvoir l'utiliser comme fluide d'entraînement dans une pompe à jet en lui conservant une température la plus basse possible, ce qui assure une fonctionnement optimum à la pompe, du fait d'une faible pression de vapeur saturante. On évite également les possibles disfonctionnements du bloc hydraulique de régulation qui seraient dus à une température très basse du carburant.

De façon préférentielle la première pompe est une pompe à jet, ne comportant pas de pièce tournante. On atteint ainsi le but recherché, à savoir augmenter de façon importante la fiabilité de cet élément du circuit carburant.

Avantageusement le fluide d'entraînement de la pompe à jet est constitué par le carburant recirculé.

Dans une variante de réalisation la première pompe est une pompe à jet à section variable. Une telle pompe permet de mieux adapter le débit et la pression de la pompe BP et ainsi d'optimiser la récupération de l'énergie apportée par le fluide de recirculation.

Dans un mode particulier de réalisation la valeur donnée à la section variable est commandée par un piston dont la position dans son cylindre est fonction des pressions existant dans le circuit carburant immédiatement en amont et en aval du doseur.

L'invention porte également sur une turbomachine comportant un ensemble d'alimentation et de pressurisation du carburant tel que décrit ci-dessus, ou encore sur un aéronef équipé d'au moins une telle turbomachine.

L'invention sera mieux comprise, et d'autres buts, détails, caractéristiques et avantages de celle-ci apparaîtront plus clairement au cours de la description explicative détaillée qui va suivre, d'un ou plusieurs modes de réalisation de l'invention donnés à titre d'exemples purement illustratifs et non limitatifs, en référence aux dessins schématiques annexés.

Sur ces dessins :
- la figure 1 est une vue schématique d'un circuit carburant pour une turbomachine, selon l'art antérieur
- la figure 2 est une vue schématique d'un circuit carburant pour turbomachine, selon un premier mode de réalisation de l'invention ;
- la figure 3 est une vue schématique d'un circuit carburant pour turbomachine, selon un second mode de réalisation de l'invention.

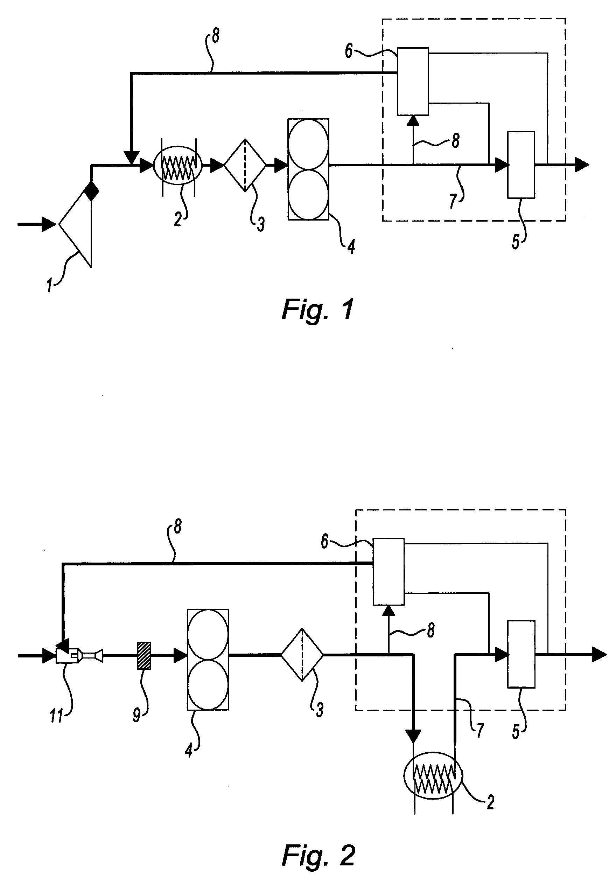

En se référant à la figure 1, on voit le circuit carburant traditionnel d'une turbomachine comprenant, dans le sens de circulation du carburant, une pompe basse pression 1 qui reçoit du carburant en provenance d'un réservoir de l'avion, par l'intermédiaire d'une pompe de gavage avion (non représentée). En sortie de la pompe basse pression 1 le carburant passe à travers un ou plusieurs échangeurs de chaleur 2 et à travers un filtre principal 3. A ce filtre est classiquement associé un circuit en dérivation, non représenté, comportant un clapet anti-retour pour prévenir un éventuel colmatage du filtre 3. En sortie du filtre 3 le carburant pénètre dans une pompe haute pression 4, du type volumétrique à débit constant. Cette pompe porte le carburant à une pression qui permet son injection dans la chambre de combustion au travers d'injecteurs appropriés et sa vaporisation dans des conditions propices à sa combustion.

En aval de la pompe HP 4 le carburant entre dans un organe hydraulique de régulation du débit (représenté en pointillés) comprenant un doseur 5 et une soupape régulatrice 6. Le doseur 5 est commandé en position de façon à laisser passer le débit désiré, en réponse à une commande du pilote pour obtenir la poussée ou la puissance désirée, selon qu'il s'agit d'un turboréacteur ou un turbomoteur. Une dérivation est placée sur le circuit d'alimentation en carburant 7, sur laquelle est placée une soupape régulatrice 6, qui gère la dérivation du débit excédentaire. Lors de son passage dans la soupape régulatrice la pression du carburant est ramenée sensiblement à sa valeur en entrée de ladite pompe HP et le circuit de dérivation 8 renvoie le débit excédentaire en amont de la pompe HP 4, à l'entrée soit de l'échangeur 3, soit du filtre principal 3 ou bien encore directement en entrée de la pompe HP 4.

Sur la figure 1 sont également représentées deux conduits qui prélèvent la pression en amont et en aval du doseur, permettant à la soupape régulatrice 6, en modulant le différentiel de pressions autour d'une valeur constante par une modification de la section de passage du fluide, de piloter la régulation en débit du système.

En se référant maintenant à la figure 2 on voit un circuit carburant selon une première version de l'invention. Il est analogue au précédent en ce qu'il comporte une pompe basse pression 11, un filtre principal 3, un ou plusieurs échangeurs de chaleur 4 et un organe de régulation du débit comprenant un doseur 5 et une soupape régulatrice 6 qui est actionnée par des conduits prélevant, comme précédemment, la pression du carburant en amont et en aval du doseur. A la différence de la figure 1 le filtre principal 3 est, ici, positionné en aval de la pompe HP 4, sans que ce positionnement soit impératif, le filtre pouvant parfaitement être positionné comme précédemment, c'est à dire en amont de la pompe HP. Le filtre principal 3 est préférentiellement positionné en amont de la pompe HP 4 si le niveau de pression fourni par la pompe à jet 11 est suffisant. Si ce n'est pas le cas, il est placé en aval de la pompe HP, une crépine fine 9 étant alors utilisée pour protéger ladite pompe HP.

En revanche, dans l'invention revendiquée, le ou les échangeurs de chaleur 2 sont placés dans le circuit carburant sur le circuit direct 7, en aval de la pompe HP et en aval du point de dérivation du carburant. La pompe BP est par ailleurs une pompe à jet 11 dont le fluide d'actionnement est le carburant qui revient par le circuit de dérivation 8.

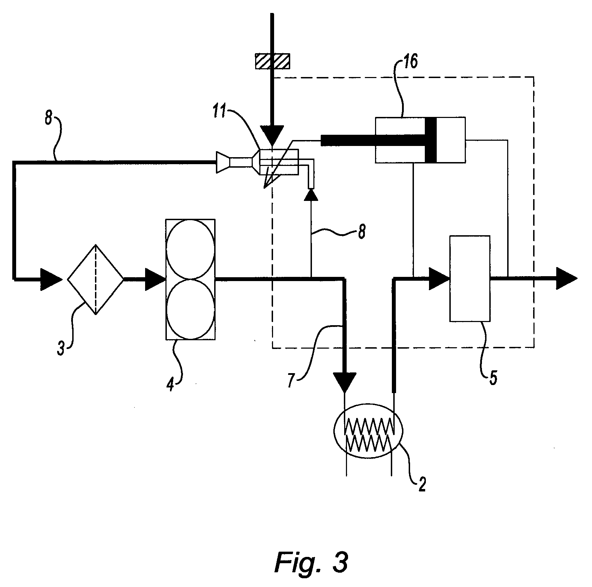

En se référant à la figure 3, on va maintenant décrire un deuxième mode de réalisation. Les éléments du circuit carburant identiques au premier mode de réalisation sont désignés par le même chiffre de référence et ne sont pas décrits à nouveau. Dans cette variante la pompe à jet 11 est une pompe à jet à section variable, c'est-à-dire dont la section d'entrée est modifiable, par exemple par la position d'un système de pointeau associé à une buse. Il est ainsi possible d'adapter la section de la pompe à jet au débit recirculé et d'optimiser la récupération de la puissance dans la grande majorité des cas de fonctionnement du moteur. Dans cette variante la soupape régulatrice est supprimée et remplacée par un piston 16 qui reçoit les informations de pression en amont et en aval du doseur 5 et qui commande en conséquence la section variable de la pompe à jet 11. Le filtre principal 3 est préférentiellement positionné en amont de la pompe HP, la pression fournie par la pompe à jet étant alors fixée à une valeur suffisante du fait de son pilotage par le piston 16.

On va maintenant décrire le fonctionnement du circuit carburant selon le premier mode de réalisation.

Le carburant en provenance du réservoir de l'avion est aspiré par la pompe à jet 11 grâce à l'effet Venturi créé dans la pompe par le carburant recirculé qui arrive par le circuit de recirculation 8. Ce carburant est à une pression supérieure à celle du carburant entrant dans la buse d'admission de la pompe à jet et est soumis à une accélération dans une chambre adaptée où il subit une décompression qui génère l'effet Venturi. Le carburant en provenance du réservoir avion est alors aspiré et mélangé au carburant de recirculation et ressort de la pompe BP comprimé à une pression permettant le fonctionnement de la pompe HP.

Le carburant passe ensuite dans la pompe HP 4 et à travers le filtre principal 3 puis entre dans le bloc hydraulique de régulation du débit, où il est dosé par le doseur 5. Seul le carburant circulant dans le circuit direct 7 est réchauffé par les échangeurs 2, qui sont positionnés à cet effet, en aval de la pompe HP et de la dérivation du circuit de recirculation. Ils sont toutefois positionnés en amont du doseur 5 pour éviter des problèmes de fonctionnement du bloc hydraulique dans des conditions de froid extrême.

Le volume de carburant qui n'est pas destiné à être injecté dans la chambre de combustion est renvoyé vers l'amont du circuit carburant, via le circuit de recirculation 8. Ce faisant il n'a pas traversé d'échangeur et reste donc à une température proche de celle des réservoirs ; sa pression de vapeur saturante reste ainsi suffisamment faible pour permettre le bon fonctionnement de la pompe à jet 11.

La mis en place de cette pompe à jet 11, qui pour fonctionner utilise la puissance du débit recirculé, permet la suppression des pièces tournantes (arbres BP, rouet centrifuge, paliers hydrodynamiques) des pompes BP traditionnelles et ainsi améliore la fiabilité du circuit carburant. Par ailleurs la diminution du nombre de pièces se traduit par une diminution de la masse globale du circuit carburant.

Le fonctionnement du circuit carburant selon le deuxième mode de réalisation est identique. Cette version permet, en choisissant une loi adaptée pour le positionnement du piston 16, l'optimisation du fonctionnement de la pompe à jet 11 sur l'ensemble des points de fonctionnement du moteur, celle-ci devant fonctionner dans une grande plage de débits et de pressions. Le piston 16 est ainsi commandé de façon à adapter à tout instant la section variable de la buse d'entrée de la pompe à jet 11 au débit recirculé et à optimiser la récupération de la puissance de ce flux pour tous les points de fonctionnement du moteur. L'ensemble constitué du piston 16 et de la buse variable de la pompe à jet 11 se comporte comme une soupape régulatrice et permet de maintenir le différentiel de pression approximativement constant aux bornes du doseur. Les pressions amont et aval du doseur pilotent le piston 16 qui, en modifiant la section de passage dans la pompe à jet, module le différentiel de pressions autour d'une valeur constante, et ainsi permet la régulation en débit du système.

Bien que l'invention ait été décrite en relation avec plusieurs modes de réalisation particuliers, il est bien évident qu'elle comprend tous les équivalents techniques des moyens décrits ainsi que leurs combinaisons si celles-ci entrent dans le cadre de l'invention.

## Revendications

1. Ensemble d'alimentation en carburant de la chambre de combustion d'une turbomachine d'aéronef et de pressurisation du carburant, comprenant au moins une première pompe (1) de pressurisation du carburant en provenance des réservoirs de l'aéronef et une seconde pompe (4) d'élévation de la pression au delà de la pression de sortie de ladite première pompe, ladite seconde pompe étant une pompe à débit de carburant constant, une partie du carburant en sortie étant envoyée vers la chambre de combustion via un circuit direct (7), la partie du carburant non envoyée vers la chambre de combustion étant recirculée, via un circuit de recirculation (8), en amont de ladite seconde pompe, ledit ensemble comportant en outre un bloc hydraulique (5, 6) de dosage du débit destiné à être injecté dans la chambre de combustion de la turbomachine au moyen d'un doseur (5) situé sur le circuit direct (7), et d'une soupape régulatrice (6) actionnée par des conduits prélevant la pression du carburant en amont et en aval du doseur (5) et au moins un échangeur de chaleur (2) dans lequel circule le carburant, et positionné dans le circuit direct (7) en aval du point de dérivation du circuit de recirculation (8), **caractérisé en ce que** ledit échangeur (2) est positionné en amont du conduit de prélèvement de la pression à l'amont du doseur et en amont du doseur de carburant (5).

2. Ensemble selon la revendication 1 dans lequel la première pompe est une pompe à jet, ne comportant pas de pièce tournante.

3. Ensemble selon la revendication 2 dans lequel le fluide d'entraînement de la pompe à jet est constitué par le carburant recirculé.

4. Ensemble selon l'une des revendications 2 ou 3 dans lequel la première pompe est une pompe à jet à section variable.

5. Ensemble selon la revendication 4 dans lequel la valeur donnée à la section variable est commandée par un piston (16) dont la position dans son cylindre est fonction des pressions existant dans le circuit carburant immédiatement en amont et en aval du doseur (5).

6. Turbomachine comportant un ensemble d'alimentation et de pressurisation du carburant selon l'une des revendications précédentes.

7. Aéronef équipé d'au moins une turbomachine selon la revendication précédente.

## Patentansprüche

1. Anordnung zur Treibstoffzufuhr zu der Brennkammer einer Turbomaschine eines Flugzeugs und zur Druckbeaufschlagung des Treibstoffs, wobei die Anordnung mindestens eine erste Pumpe (1) zur Druckbeaufschlagung des Treibstoffs, der von Tanks des Flugzeugs stammt, und einer zweiten Pumpe (4) zur Erhöhung des Drucks über den Druck am Ausgang der ersten Pumpe umfasst, wobei die zweite Pumpe eine Pumpe mit konstantem Treibstoffdurchsatz ist, wobei ein Teil des Treibstoffs am Ausgang mittels eines direkten Kreislaufs (7) zu der Brennkammer gesendet wird, wobei der Teil des Brennstoffs, der nicht zu der Brennkammer gesendet wird, mittels eines Rückführungskreislaufs (8) stromaufwärts der zweiten Pumpe zurückgeführt wird, wobei die Anordnung außerdem einen Hydraulikblock (5, 6) zur Dosierung des Durchsatzes, der in die Brennkammer der Turbomaschine eingespritzt werden soll, mithilfe eines Dosierers (5), der sich an dem direkten Kreislauf (7) befindet, und eines Regulierventils (6), das von Leitungen betätigt wird, die den Druck des Treibstoffs stromaufwärts und stromabwärts des Dosierers (5) abnehmen, und mindestens einen Wärmetauscher (2) umfasst, in dem der Treibstoff zirkuliert,
**dadurch gekennzeichnet, dass** der Tauscher (2) in dem direkten Kreislauf (7) stromabwärts des Punkts der Abzweigung des Rückführungskreislaufs (8), strom-aufwärts der Leitung zur Abnahme des Drucks stromaufwärts des Dosierers und stromaufwärts des Treibstoffdosierers (5) positioniert ist.

2. Anordnung gemäß Anspruch 1, bei der die erste Pumpe eine Strahlpumpe ist, die keine beweglichen Teile umfasst.

3. Anordnung gemäß Anspruch 2, bei der die Antriebsflüssigkeit der Strahlpumpe aus dem zurückgeführten Treibstoff besteht.

4. Anordnung gemäß einem der Ansprüche 2 oder 3, bei der die erste Pumpe eine Strahlpumpe mit variablem Querschnitt ist.

5. Anordnung gemäß Anspruch 4, bei der der gegebene Wert bei dem variablen Querschnitt von einem Kolben (16) gesteuert wird, dessen Stellung in seinem Zylinder von Drücken abhängt, die in dem Treibstoffkreislauf unmittelbar stromaufwärts und stromabwärts des Dosierers (5) herrschen.

6. Turbomaschine, die eine Anordnung zur Zufuhr und Druckbeaufschlagung des Treibstoffs gemäß einem der vorhergehenden Ansprüche umfasst.

7. Flugzeug, das mit mindestens einer Turbomaschine gemäß dem vorhergehenden Anspruch ausgerüstet ist.

## Claims

1. An assembly for supplying the combustion chamber of an aircraft turbine engine with fuel and for pressurizing the fuel, comprising at least a first pump (1) for pressurizing the fuel drawn from the tanks of the aircraft and a second pump (4) for raising the pressure above the outlet pressure of said first pump, said second pump being a constant fuel delivery pump, some of the fuel leaving this pump being sent to the combustion chamber via a direct circuit (7), the part of the fuel that is not sent to the combustion chamber being recirculated via a recirculation circuit (8) upstream of said second pump, said assembly further including a hydraulic unit (5, 6) for metering the flow to be injected into the combustion chamber of the turbine engine by means of a metering device (5) located in the direct circuit, and a regulating valve (6) actuated by conduits which sample the fuel pressure upstream and downstream of the metering device (5), and at least one heat exchanger (2) in which the fuel flows, and positioned in the direct circuit (7) downstream of the branching point of the recirculation circuit (8,)
**characterized in that** said exchanger (2) is positioned upstream of the conduit for sampling the pressure upstream of the metering device, and upstream of the fuel metering device (5).

2. The assembly as claimed in claim 1, wherein the first pump is a jet pump which has no rotating parts.

3. The assembly as claimed in claim 2, wherein the driving fluid of the jet pump is formed by the recirculated fuel.

4. The assembly as claimed in claim 2 or 3, wherein the first pump is a jet pump with a variable cross section.

5. The assembly as claimed in claim 4, wherein the size of the variable cross section is controlled by a piston (16) whose position in its cylinder is a function of the pressures in the fuel circuit immediately upstream and downstream of the metering device (5).

6. A turbine engine including a fuel supply and pressurization assembly according to claim 1.

7. An aircraft fitted with at least one turbine engine as claimed in the preceding claim.
